# FASCICULE DE BREVET EUROPEEN

(11) **EP 1 837 935 B1**
(45) Date de publication et mention de la délivrance du brevet: **16.12.2009**
(21) Numéro de dépôt: 07290335.4
(22) Date de dépôt: 20.03.2007
(51) Int. Cl.: H01M 4/24, H01M 4/62

(54) **Électrode plastifiée pour accumulateur alcalin**
Plastifizierte Elektrode für alkalischen Akkumulator
Plasticized electrode for alkaline storage battery

(30) Priorité: 21.03.2006 FR 0602446
(43) Date de publication de la demande: 26.09.2007
(73) Titulaire: Saft Groupe S.A., 93170 Bagnolet (FR)
(72) Inventeur: Bernard, Patrick, 33000 Bordeaux (FR); Goubault, Lionel, 33360 Carigan de Bordeaux (FR); Leroy, Nicolas, 78210 Saint Cyr l'Ecole (FR)
(74) Mandataire: Hirsch & Associés

(56) Documents cités:
- EP-A1- 0 584 987
- EP-A1- 0 865 090
- EP-A2- 0 652 602
- EP-A2- 0 809 314
- US-A1- 2002 122 950
- US-A1- 2004 058 240

## Description

### DOMAINE TECHNIQUE

La présente invention concerne une électrode plastifiée pour un accumulateur à électrolyte alcalin, comme par exemple un accumulateur nickel-cadmium ou nickel-métal hydrure. Elle s'étend en outre à l'accumulateur contenant une telle électrode.

### ETAT DE LA TECHNIQUE

Il existe plusieurs types d'électrodes susceptibles d'être utilisées dans un accumulateur à électrolyte alcalin, tels que les électrodes frittées et les électrodes non frittées. Par rapport aux autres types d'électrodes, une électrode non frittée contient une plus grande quantité de matière, sa capacité volumique est donc augmentée, et son coût de fabrication est plus faible.

Une électrode non-frittée se compose d'un support servant de collecteur de courant sur lequel on enduit une pâte contenant la matière active et un liant, à laquelle on ajoute le plus souvent un matériau conducteur. Une fois la pâte déposée sur ou dans le support, l'ensemble est comprimé et séché pour obtenir une électrode de la densité et de l'épaisseur souhaitée.

Parmi les électrodes non-frittées, on distingue l'électrode de type mousse de nickel qui possède un support tridimensionnel, et l'électrode plastifiée qui possède un support sous forme d'une feuille de métal perforé ou de métal déployé.

Une analyse des coûts par composants d'un accumulateur NiMH conventionnel fait apparaître que le substrat de l'électrode positive, de type mousse de nickel, donc tridimensionnel, représente plus de 50% du coût de l'électrode actuelle. Or, la généralisation de la technologie NiMH dans des applications telles que le véhicule électrique hybride nécessite des réductions de coût importantes des accumulateurs.

C'est pourquoi, l'utilisation d'un support bidimensionnel est parfois préférée à celle d'un conducteur tridimensionnel.

Cependant, la tenue mécanique de la matière active et son adhésion au support bidimensionnel sont généralement insuffisantes.

Afin d'améliorer la tenue mécanique et l'adhésion de la matière active au support tridimensionnel, le document EP-A-0 865 090 propose une électrode comprenant comme liant un fluoroplastique tel que le polytétrafluoroéthylène (PTFE) et un agent de couplage de type silane.

Des électrodes positives de technologie plastifiée comportant un liant à base de styrène-acrylate ont été développées. L'article paru dans Journal of The Electrochemical Society (152 (5) A905-A912 (2005)) divulgue en effet une électrode positive d'accumulateur nickel métal hydrure comprenant un feuillard d'acier nickelé tridimensionnel et un liant de type styrène-acrylate. Cependant la durée de vie de cet accumulateur est de 1000 cycles à 25°C et de seulement 180 cycles à 45°C en raison de la décomposition du styrène-acrylate.

On cherche donc un accumulateur alcalin présentant une durée de vie en cyclage et/ou une durée de vie calendaire améliorée (la vie calendaire correspond à la situation d'un accumulateur en stockage, non en fonctionnement), pour une température supérieure ou égale à 25°C, de préférence supérieure ou égale à 40°C.

### RESUME DE L'INVENTION

L'invention concerne une électrode comprenant un support conducteur métallique et une pâte comprenant une matière électrochimiquement active et un liant ; ce liant comprenant :
a) un composé de type silane
b) un polymère comportant au moins un monomère acrylique, et représentant au moins environ 0,15% du poids de ladite pâte.

L'utilisation de silane améliore la durée de vie de l'accumulateur en cyclage et/ou la durée de vie calendaire pour une température supérieure ou égale à 25°C, de préférence supérieure ou égale à 40°C.

L'invention s'étend à un accumulateur à électrolyte alcalin comprenant une telle électrode.

### EXPOSE DETAILLE DE MODES DE REALISATION DE L'INVENTION

L'article paru dans Journal of The Electrochemical Society (152 (5) A905-A912 (2005)) explique qu'un liant d'électrode constitué de styrène-acrylate se dégrade rapidement lorsqu'il est utilisé dans les électrodes d'un accumulateur fonctionnant en cyclage à une température supérieure à 20°C. Ceci a pour conséquence de réduire la durée de vie en cyclage de cet accumulateur. L'invention résout ce problème en substituant une partie du styrène-acrylate, par un composé de type silane. Pour que l'électrode conserve une bonne flexibilité, la substitution du polymère par le composé de type silane doit néanmoins être limitée. Selon l'invention, le pourcentage massique du polymère comprenant un monomère acrylique doit être au moins 0,15%, de préférence au moins environ 0,30% et de préférence encore au moins environ 0,45 % du poids de la pâte.

Le composé de type silane mis en oeuvre dans l'invention, est représenté par la formule : Xₚ-Si (R) ₄₋ₚ dans laquelle :
X est choisi dans le groupe comprenant un alkyle, substitué ou non par un halogène, un alcényle, un aryle, un alkylaryle, un arylalkyle, un alcénylaryle, un arylalcényle, un époxy, une amine, une styrylamine, un méthacrylate.
R est choisi dans le groupe comprenant H, un halogène, un groupement hydroxy, alkoxy, acyloxy, un alkyle cyclique, un aryle ou -NR₂ dans lequel R est H ou un alkyle.
p est 1, 2 ou 3.

Selon un mode de réalisation préféré, le composé de type silane est le glycidyloxypropyltrimethoxy-silane.

Le polymère comprenant au moins un monomère acrylique peut être choisi parmi le styrène-acrylate, le poly(méth)acrylate, le styrène-anhydride-maléique hydrolysé.

Les proportions massiques entre le polymère et le composé de type silane varient entre 95 % / 5% et 50 % / 50 %. Cela permet ainsi d'assurer des propriétés mécaniques adéquates à l'électrode (élasticité, cohésion intergrains et adhérence sur le collecteur de courant), tout en améliorant la résistance chimique du liant.

De préférence, la proportion massique du liant ajouté est comprise entre 0,16 et 3 % du poids de la pâte.

L'invention s'applique aux électrodes positives comme aux électrodes négatives d'un accumulateur alcalin.

La pâte déposée sur le collecteur de courant comprend généralement la matière électrochimiquement active, un ou plusieurs épaississants, le liant et généralement un ou plusieurs éléments conducteurs électroniques.

La matière électrochimiquement active de l'électrode positive peut être un hydroxyde de nickel contenant au moins un élément choisi parmi Zn, Cd ou Mg et au moins un élément choisi parmi Co, Mn, Al, Y, Ca, Sr, Zr, Cu. De préférence, cet hydroxyde possède une forme sphéroïdale et présente une granulométrie comprise entre 7 et 20 µm. L'hydroxyde de nickel peut être de façon préférentielle recouvert par un revêtement à base d'hydroxyde de cobalt éventuellement partiellement oxydé, ou associé à un composé conducteur, constitué principalement de Co(OH)₂. D'autres composés tels que Co, CoO, LiCoO₂, poudres métalliques, carbones, ZnO, Y₂O₃, Yb₂O₃, Nb₂O₃ peuvent être ajoutés à la matière active.

La matière électrochimiquement active de l'électrode négative peut être :
- un alliage hydrurable pouvant être du type AB₅, A₂B₇ ou A₅B₁₉,
- un composé à base de cadmium tel que CdO ou Cd(OH)₂.

L'électrode peut également comprendre un polymère cellulosique tel que la carboxyméthylcellulose (CMC), l'hydroxypropylmethylcellulose (HPMC), l'hydroxypropylcellulose (HPC), ou l'hydroxymethylcellulose (HEC), ou un polymère de type Polyacideacrylique (PAAC).

Selon un mode de réalisation, des fibres conductrices ou non conductrices peuvent être ajoutées à l'électrode. De préférence, la quantité de fibres ajoutées est inférieure à 1,5 % du poids de la pâte. De préférence, il s'agira de fibres de polymères de polypropylène par exemple, de diamètre compris entre 10 et 35 µm et de longueur inférieure à 2 mm.

Le support de l'électrode est un conducteur métallique. Il peut être un support bidimensionnel, par exemple en nickel de type déployé ou un feuillard en acier nickelé, d'épaisseur comprise entre 20 µm et 100 µm ou un feuillard en acier nickelé mis en forme tridimensionnelle, d'épaisseur totale comprise entre 100 et 700 µm.

L'invention concerne aussi un accumulateur alcalin de type Nickel Cadmium ou Nickel Métal Hydrure par exemple, utilisant au moins une électrode plastifiée décrite ci-dessus (positive, négative ou les deux) et contenant un électrolyte à base de KOH et/ou NaOH et/ou LiOH et un séparateur à base de fibres de polyoléfines non traitées, ou traitées par l'acide acrylique ou sulfonées ou à base de fibres de polyamide.

L'accumulateur peut être de type cylindrique ou prismatique, ouvert ou étanche (valve regulated), pour des applications portables ou industrielles (automobile et éclairage de sécurité notamment).

L'invention concerne aussi l'utilisation d'une composition comprenant :
a) un composé de type silane, et
b) au moins 0,15% en poids d'un polymère comportant au moins un monomère acrylique
dans la fabrication d'une électrode d'accumulateur afin d'améliorer la durée de vie calendaire et/ou la durée de vie en cyclage de cet accumulateur, à une température supérieure ou égale à 25°C, de préférence supérieure ou égale à 40°C.

### EXEMPLES

Une première électrode positive de référence (P1) est réalisée avec une pâte ayant comme composition pondérale:

| | |
|---|---|
| Matière électrochimiquement active | 88,2% |
| Matériau conducteur Co(OH)₂ | 10% |
| Liant PTFE | 1% |
| Polymère cellulosique CMC | 0,3% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est introduite dans un support conducteur tridimensionnel qui est une mousse de nickel de porosité d'environ 95%. Une fois la pâte introduite dans le support, l'ensemble est séché afin d'en éliminer l'eau, laminé puis découpé pour obtenir l'électrode aux dimensions désirées. L'électrode finie, présente une porosité de 30% et un grammage de 16g/dm².

Une électrode positive plastifiée de référence (P2) est réalisée avec une pâte ayant pour composition pondérale :

| | |
|---|---|
| Matière électrochimiquement active | 85,2% |
| Matériau conducteur Co(OH)₂ | 10% |
| Liant PTFE | 3% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est déposée simultanément sur les deux faces d'un support métallique bidimensionnel (acier nickelé perforé d'épaisseur 75µm) de manière homogène. L'ensemble est ensuite séché afin d'en éliminer l'eau, puis laminé à l'épaisseur désirée et découpée pour obtenir une électrode positive. L'électrode finie, présente une porosité de 35% et un grammage de 16g/dm².

Une électrode positive plastifiée de référence (P3) est réalisée avec une pâte ayant pour composition pondérale :

| | |
|---|---|
| Matière électrochimiquement active | 87,2% |
| Matériau conducteur Co(OH)₂ | 10% |
| Liant styrène-acrylate | 1% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est déposée simultanément sur les deux faces d'un support métallique bidimensionnel (acier nickelé perforé d'épaisseur 75µm) de manière homogène. L'ensemble est ensuite séché afin d'en éliminer l'eau, puis laminé à l'épaisseur désirée et découpée pour obtenir une électrode positive. L'électrode finie, présente une porosité de 35% et un grammage de 16g/dm².

Une électrode positive de l'invention (P4) est réalisée avec une pâte ayant pour composition pondérale :

| | |
|---|---|
| Matière électrochimiquement active | 87,2% |
| Matériau conducteur Co(OH)₂ | 10% |
| Liant styrène-acrylate | 0,7% |
| Glycidoxypropyltrimethoxy-Silane | 0,3% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est déposée simultanément sur les deux faces d'un support métallique bidimensionnel (acier nickelé perforé d'épaisseur 75µm) de manière homogène. L'ensemble est ensuite séché afin d'en éliminer l'eau, puis laminé à l'épaisseur désirée et découpé pour obtenir une électrode positive. L'électrode finie, présente une porosité de 35% et un grammage de 16g/dm².

Une électrode positive plastifiée de référence(P5) est réalisée avec une pâte ayant pour composition pondérale :

| | |
|---|---|
| Matière électrochimiquement active | 88,1% |
| Matériau conducteur Co(OH)₂ | 10% |
| Liant styrène-acrylate | 0,10% |
| Glycidoxypropyltrimethoxy-Silane | 0,03% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est déposée simultanément sur les deux faces d'un support métallique bidimensionnel (acier nickelé perforé d'épaisseur 75µm) de manière homogène. L'ensemble est ensuite séché afin d'en éliminer l'eau, puis laminé à l'épaisseur désirée et découpée pour obtenir une électrode positive. L'électrode finie, présente une porosité de 35% et un grammage de 16g/dm².

Une électrode positive de l'invention (P6) est réalisée avec une pâte ayant pour composition pondérale :

| | |
|---|---|
| Matière électrochimiquement active | 87,2% |
| Matériau conducteur Co(OH)₂ | 10% |
| Liant Polyacrylate | 0,7% |
| Glycidoxypropyltrimethoxy-Silane | 0,3% |
| Polymère cellulosique CMC | 0,3% |
| Fibre polymère polypropylène | 1,0% |
| Y₂O₃ | 0,5% |

La matière électrochimiquement active pulvérulente est constituée d'un hydroxyde à base de nickel, et contenant les substituants suivants : cobalt et zinc. La viscosité de la pâte est ajustée avec de l'eau. La pâte est déposée simultanément sur les deux faces d'un support métallique bidimensionnel (acier nickelé perforé d'épaisseur 75µm) de manière homogène. L'ensemble est ensuite séché afin d'en éliminer l'eau, puis laminé à l'épaisseur désirée et découpée pour obtenir une électrode positive. L'électrode finie, présente une porosité de 35% et un grammage de 16g/dm².

Une électrode négative de référence (N1) est réalisée avec une pâte ayant pour composition pondérale :

| | |
|---|---|
| Matière électrochimiquement active | 97,4% |
| Liant Styrène-acrylate | 1,0% |
| Carbone | 0,5% |
| Polymère cellulosique CMC | 0,3% |
| Fibre polymère polypropylène | 0,8% |

La matière électrochimiquement active pulvérulente est un composé intermétallique de type AB₅ capable de former un hydrure, une fois chargé. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode négative. L'électrode finie, présente une porosité de 25% et un grammage de 19g/dm².

Une électrode négative de l'invention (N2) est réalisée avec une pâte ayant pour composition pondérale :

| | |
|---|---|
| Matière électrochimiquement active | 97,4% |
| Liant Styrène-acrylate | 0,7% |
| Glycidoxypropyltrimethoxy-Silane | 0,3% |
| Carbone | 0,5% |
| Polymère cellulosique CMC | 0,3% |
| Fibre polymère polypropylène | 0,8% |

La matière électrochimiquement active pulvérulente est un composé intermétallique de type AB₅ capable de former un hydrure, une fois chargé. La viscosité de la pâte est ajustée avec de l'eau. La pâte est déposée simultanément sur les deux faces d'un support métallique bidimensionnel (acier nickelé perforé d'épaisseur 50µm) de manière homogène. L'ensemble est ensuite séché afin d'en éliminer l'eau, puis laminé à l'épaisseur désirée et découpée pour obtenir une électrode négative. L'électrode finie, présente une porosité de 25% et un grammage de 19g/dm² .

Un test de tenue mécanique des électrodes ainsi fabriquées est réalisé de la façon suivante : Chaque électrode est pesée, puis lachée d'une hauteur de 50 cm sur une surface plane. La chute est répétée 10 fois. Puis l'électrode est pesée de nouveau. Le résultat du test est exprimé comme le ratio de la masse initiale moins la masse finale rapportée à la masse initiale. Une électrode sera d'autant plus solide que ce ratio sera faible et la tenue mécanique de l'électrode est considérée comme satisfaisante lorsque ce ratio est inférieur à 0,5%.

Les résultats du test mécanique sont indiqués dans le tableau 1 :

**Tableau 1**

| Electrode | P1 | P2 | P3 | P4 | P5 | P6 | N1 | N2 |
|---|---|---|---|---|---|---|---|---|
| Support | Mousse | feuillard | feuillard | feuillard | feuillard | feuillard | feuillard | feuillard |
| PTFE | 1% | 3% | - | - | - | - | - | - |
| Styrène-acrylate | - | | 1% | 0,7% | 0,10% | - | 1% | 0,7% |
| Polyacrylate | - | | - | - | - | 0,7% | - | - |
| Silane | - | | - | 0,3% | 0,03% | 0,3% | - | 0,3% |
| Test (%) | 0,21 | 13 | 0,32 | 0,38 | 15 | 0,43 | 0,23 | 0,29 |

L'électrode P1 comprend un support tridimensionnel, qui est une mousse de nickel, et du PTFE comme liant. P1 présente une stabilité mécanique satisfaisante.

L'électrode P2 comprend un support bidimensionnel, qui est un feuillard et 3% de PTFE comme liant. P2 présente une stabilité mécanique médiocre qui ne permet pas d'effectuer un montage en accumulateur cylindrique.

L'électrode P3 comprend un support bidimensionnel, qui est un feuillard, et 1% de styrène-acrylate comme liant.

Dans l'électrode P4, en comparaison avec l'électrode P3, une fraction du liant de styrène-acrylate a été remplacée par du silane dont le pourcentage massique représente 0,3% du poids de la pâte. La perte de masse de matière active mesurée au cours du test passe de 0,32 % à 0,38 % ce qui correspond à une dégradation de la tenue mécanique d'environ 20%. Toutefois, la dégradation de la tenue mécanique reste dans les limites acceptables car la perte de masse reste inférieure à 0,5 %.

L'électrode P5 qui est hors du domaine de l'invention présente un taux de liant global de 0,13% dont 0,03% de silane. Dans ce cas, la tenue mécanique de l'électrode est insuffisante pour effectuer un montage en accumulateur cylindrique.

En comparant les résultats obtenus avec les électrodes négatives N1 et N2, on constate que la substitution d'une partie du styrène-acrylate par du silane a pour effet d'augmenter la perte de masse de matière active ; celle-ci passe de 0,23 % à 0,29 %, soit une augmentation de 26 %. Toutefois, cette dégradation de la tenue mécanique reste acceptable car la perte de masse reste inférieure à 0,5 %.

L'augmentation de la perte de masse provoquée par le remplacement d'une partie du styrène-acrylate par du silane n' entraîne pas de baisse de la durée de vie d'un accumulateur possédant au moins une électrode selon l'invention. Au contraire, la durée de vie d'un accumulateur possédant au moins une électrode selon l'invention, présente une durée de vie élevée en cyclage à 40°C. Ceci est démontré par les tests électriques suivants :

Un générateur électrochimique secondaire étanche NiMH de format AA, dont l'électrode positive est l'électrode à capacité limitante, et dont la capacité nominale est de 1200 mAh, est constitué des électrodes positive et négative décrites ci-dessus. Une électrode positive est accolée à une électrode négative dont elle est isolée par un séparateur non-tissé de polypropylène pour former le faisceau électrochimique. Le faisceau ainsi spiralé est inséré dans un godet métallique et imprégné d'un électrolyte alcalin qui est une solution alcaline aqueuse constituée d'un mélange d'hydroxyde de potassium KOH 7,5N, d'hydroxyde de sodium NaOH 0,4N et d'hydroxyde de lithium LiOH 0,5N pour constituer les accumulateurs A, B, C, D et E. La composition de chacun des accumulateurs est décrite dans le tableau 2.

**Tableau 2**

| Référence | A | B | C | D | E |
|---|---|---|---|---|---|
| Electrode Positive | P1 | P3 | P4 | P6 | P4 |
| Electrode Négative | N1 | N1 | N1 | N1 | N2 |

La composition de liant selon l'invention confère aux électrodes une bonne flexibilité. Elle permet d'effectuer un enroulement spiralé de ces électrodes dans un accumulateur de format cylindrique.

### Performances électrochimiques :

Après un repos de 48 heures à température ambiante, une formation électrique des accumulateurs est effectuée dans les conditions suivantes :
Cycle 1 :
   Repos pendant 2 h à 85°C
   Charge à 0,025Ic pendant 8h à 80°C, où Ic est le courant nécessaire pour décharger la capacité nominale C du générateur en 1 h.
   Repos pendant 2 h à 20°C
   Charge de 3 h au courant de 0,33Ic
   Décharge à 0,2Ic jusqu'à une tension de 1V
Cycles 2 à 10 :
   Charge de 16 h au courant de 0,1Ic
   Décharge à 0,2Ic jusqu'à une tension de 1V
Cycle 11 :
   Charge de 72 minutes au courant de Ic
   Décharge à Ic jusqu'à une tension de 1V

Après les 11 cycles initiaux, la moitié des accumulateurs subit le test de cyclage 1 et l'autre moitié le test de cyclage 2.
Test de cyclage 1 :
   T=20°C
Conditions de cyclage :
   Charge pendant 66 minutes au courant de C à 20°C
   Décharge à Ic à 20°C jusqu'à une tension de 1V
Test de cyclage 2 :
   T=40°C
   Conditions de cyclage :
   Charge pendant 66 minutes au courant de C à 40°C
   Décharge à Ic à 40°C jusqu'à une tension de 1V

La durée de vie des accumulateurs est déterminée par le nombre de cycles réalisé jusqu'à ce que la capacité de l'accumulateur devienne inférieure à 80% de la capacité nominale. Les résultats des tests électriques sont indiqués dans le tableau 3 :

**Tableau 3**

| Référence | A | B | C | D | E |
|---|---|---|---|---|---|
| Electrode Positive | P1 | P3 | P4 | P6 | P4 |
| Electrode Négative | N1 | N1 | N1 | N1 | N2 |
| Rendement de l'électrode positive Au cycle 10 (mAh/g) | 253 | 254 | 253 | 254 | 253 |
| Rendement de l'électrode positive Au cycle 11 (mAh/g) | 244 | 243 | 243 | 242 | 245 |
| Durée de vie (cycles) au Test 1 à 20°C | 730 | 715 | 725 | 718 | 740 |
| Durée de vie (cycles) au Test 2 à 40°C | 512 | 146 | 488 | 492 | 685 |

Les accumulateurs C, D et E comprennent une électrode positive selon l'invention. La durée de vie de ces accumulateurs à l'issue du test 2 est élevée car elle est de 488, 492 et 685 cycles respectivement, en comparaison avec 146 cycles obtenus pour l'accumulateur B.

L'accumulateur E comprend une électrode positive et une électrode négative selon l'invention. Sa durée de vie à 40°C est la plus élevée : elle est de 685 cycles.

On comprend donc que la substitution, dans l'électrode positive ou négative, d'une fraction du polymère comprenant le monomère acrylique par un silane, permet d'améliorer la durée de vie de l'accumulateur en test de cyclage à 40°C. Elle ne dégrade ni le rendement de l'électrode, ni la durée de vie de l'accumulateur en cyclage à 20°C.
On peut donc en déduire que dans le cas d'un liant comprenant un polymère comprenant un monomère acrylique, et un composé de type silane, la bonne tenue mécanique de l'électrode n'est pas le seul facteur permettant d'obtenir une durée de vie élevée de l'accumulateur. En effet, on a montré dans le Tableau 1 que la substitution d'une fraction du polymère de styrène-acrylate par du silane dégradait la tenue mécanique de l'électrode (comparaison de l'électrode P4 avec l'électrode P3 et de l'électrode N2 avec l'électrode N1). Néanmoins, les essais de durée de vie d'un accumulateur comprenant une électrode dans laquelle une fraction du polymère comprenant un monomère acrylique a été substituée par du silane, ont montré que la durée de vie de l'accumulateur était élevée même pour une température de cyclage de 40°C.

## Revendications

1. Electrode comprenant un support conducteur métallique et une pâte comprenant une matière électrochimiquement active et un liant ; ce liant comprenant :
a) un composé de type silane, et
b) un polymère comportant au moins un monomère acrylique, et représentant au moins 0,15% du poids de ladite pâte.

2. Electrode selon la revendication 1, dans laquelle le polymère représente au moins environ 0,3%, de préférence au moins environ 0,45% du poids de ladite pâte.

3. Electrode selon l'une des revendications 1 ou 2, dans laquelle le support conducteur est bidimensionnel.

4. Electrode selon l'une des revendications précédentes, dans laquelle le composé de type silane a pour formule : Xp-Si (R)₄₋ₚ dans laquelle :
X est choisi dans le groupe comprenant un alkyle, substitué ou non par un halogène, un alcényle, un aryle, un alkylaryle, un arylalkyle, un alcénylaryle, un arylalcényle, un époxy, une amine, une styrylamine, un méthacrylate.
R est choisi dans le groupe comprenant H, un halogène, un groupement hydroxy, alkoxy, acyloxy, un alkyle cyclique, un aryle ou -NR₂ dans lequel R est H ou un alkyle.
p est 1, 2 ou 3.

5. Electrode selon l'une des revendications précédentes, dans laquelle le composé de type silane est le g-ycidyloxypropyltrimethoxy-silane.

6. Electrode selon l'une des revendications précédentes, dans laquelle polymère est choisi parmi le styrène-acrylate, le poly(méth)acrylate, le styrène-anhydride-maléique hydrolysé.

7. Electrode selon l'une des revendications précédentes, dans laquelle les proportions massiques entre le polymère et le composé de type silane varient entre 95 % / 5 % et 50 % / 50 %.

8. Electrode selon l'une des revendications précédentes, dans laquelle la proportion massique du liant est comprise entre 0,16 et 3 % du poids de la pâte.

9. Electrode selon l'une des revendications précédentes, comprenant en outre des fibres.

10. Electrode selon la revendication 9, dans laquelle les fibres sont des fibres de polypropylène.

11. Electrode selon la revendication 9 ou 10, dans laquelle la quantité de fibres ajoutées est inférieure à 1,5 % du poids de la pâte.

12. Electrode selon l'une des revendications précédentes, dans laquelle la matière électrochimiquement active est un composé à base d'hydroxyde de nickel.

13. Electrode selon l'une des revendications 1 à 11, dans laquelle la matière électrochimiquement active est un alliage hydrurable.

14. Electrode selon l'une des revendications 1 à 11, dans laquelle la matière électrochimiquement active est un composé à base de cadmium.

15. Accumulateur à électrolyte alcalin comprenant une électrode selon l'une quelconque des revendications précédentes.

16. Utilisation d'une composition comprenant :
a) un composé de type silane, et
b) au moins 0,15% en poids d'un polymère comportant au moins un monomère acrylique
dans la fabrication d'une électrode d'accumulateur, afin d'améliorer la durée de vie calendaire ou en cyclage de l'accumulateur à une température supérieure ou égale à 25°C.

17. Utilisation d'une composition selon la revendication 16, dans laquelle le silane et/ou le polymère est selon l'une quelconque des revendications 4, 5 ou 6.

## Claims

1. Electrode comprising a conductive metal support and a paste comprising an electrochemically-active material and a binder; this binder comprising:
a) a compound of silane type, and
b) a polymer comprising at least one acrylic monomer, and representing at least 0.15% of the weight of said paste.

2. Electrode according to claim 1, in which the polymer represents at least approximately 0.3%, preferably at least approximately 0.45% of the weight of said paste.

3. Electrode according to one of claims 1 or 2, in which the conductive support is two-dimensional.

4. Electrode according to one of the preceding claims, in which the compound of silane type has the formula: Xₚ-Si (R)₄₋ₚ in which:
- X is chosen from the group comprising an alkyl, substituted or not by a halogen, an alkenyl, an aryl, an alkylaryl, an arylalkyl, an alkenylaryl, an arylalkenyl, an epoxy, an amine, a styrylamine, a methacrylate.
- R is chosen from the group comprising H, a halogen, a hydroxy, alkoxy, acyloxy group, a cyclic alkyl, an aryl or -NR₂ in which R is H or an alkyl.
- p is 1, 2 or 3.

5. Electrode according to one of the preceding claims, in which the compound of silane type is glycidyloxypropyltrimethoxy-silane.

6. Electrode according to one of the preceding claims, in which the polymer is chosen from styrene acrylate, poly(meth)acrylate, hydrolyzed styrenemaleic anhydride.

7. Electrode according to one of the preceding claims, in which the mass proportions of the polymer and the compound of silane type vary between 95% / 5% and 50% / 50%.

8. Electrode according to one of the preceding claims, in which the mass proportion of the binder is comprised between 0.16 and 3% of the weight of the paste.

9. Electrode according to one of the preceding claims, also comprising fibres.

10. Electrode according to claim 9, in which the fibres are polypropylene fibres.

11. Electrode according to claim 9 or 10, in which the quantity of fibres added is less than 1.5% of the weight of the paste.

12. Electrode according to one of the preceding claims, in which the electrochemically-active material is a compound based on nickel hydroxide.

13. Electrode according to one of claims 1 to 11, in which the electrochemically-active material is a hydrogen-fixing alloy.

14. Electrode according to one of claims 1 to 11, in which the electrochemically-active material is a compound based on cadmium.

15. Alkaline electrolyte battery comprising an electrode according to any one of the preceding claims.

16. Use of a composition comprising:
a) a compound of silane type, and
b) at least 0.15% by weight of a polymer comprising at least one acrylic monomer
in the production of a battery electrode, in order to improve the calendar or cycle life of the battery at a temperature greater than or equal to 25°C.

17. Use of a composition according to claim 16, in which the silane and/or the polymer is according to any one of claims 4, 5 or 6.

## Patentansprüche

1. Elektrode, umfassend einen metallischen leitenden Träger und eine Paste mit einem elektrochemisch aktiven Material und ein Bindemittel; wobei dieses Bindemittel umfasst:
a) eine Verbindung des Typs Silan, und
b) ein Polymer, umfassend mindestens ein Acrylmonomer, welches mindestens 0,15 % des Gewichts der Paste beträgt.

2. Elektrode nach Anspruch 1, bei der das Polymer mindestens ungefähr 0,3 %, vorzugsweise mindestens ungefähr 0,45 % des Gewichts der Paste beträgt.

3. Elektrode nach einem der Ansprüche 1 oder 2, bei der der leitende Träger zweidimensional ist.

4. Elektrode nach einem der vorhergehenden Ansprüche, bei der die Verbindung des Typs Silan folgende Formel hat: Xₚ - Si (R)_{Δ-p}, wobei
X aus der Gruppe ausgewählt wird, umfassend ein Alkyl, das durch ein Halogen substituiert ist oder nicht, ein Alcenyl, ein Aryl, ein Alkylaryl, ein Arylalkyl, ein Alcenylaryl, ein Arylalcenyl, ein Epoxy, ein Amin, ein Styrylamin, ein Methacrylat,
R in der Gruppe ausgewählt wird, umfassend H, ein Halogen, eine Hydroxy-, Alkoxy-, Acyloxy-Gruppierung, ein zyklisches Alkyl, ein Aryl oder - NR₂, wobei R H oder ein Alkyl ist,
p 1, 2 oder 3 ist.

5. Elektrode nach einem der vorhergehenden Ansprüche, bei der die Verbindung des Typs Silan das Glycidyloxypropyltrimethoxysilan ist.

6. Elektrode nach einem der vorhergehenden Ansprüche, bei der das Polymer unter dem Styrol-Acrylat, Poly(meth)acrylat, hydrolisierten Styrol-Anhydrid-Malein ausgewählt wird.

7. Elektrode nach einem der vorhergehenden Ansprüche, bei der die Masseverhältnisse zwischen dem Polymer und der Verbindung des Typs Silan zwischen 95 % / 5 % und 50 % / 50 % variieren.

8. Elektrode nach einem der vorhergehenden Ansprüche, bei der das Masseverhältnis des Bindemittels zwischen 0,16 und 3 % des Gewichts der Paste beträgt.

9. Elektrode nach einem der vorhergehenden Ansprüche, ferner umfassend Fasern.

10. Elektrode nach Anspruch 9, bei der die Fasern Polypropylenfasern sind.

11. Elektrode nach Anspruch 9 oder 10, bei der die hinzugefügte Fasermenge geringer als 1,5 % des Gewichts der Paste beträgt.

12. Elektrode nach einem der vorhergehenden Ansprüche, bei der das elektrochemisch aktive Material eine Verbindung auf Basis von Nickelhydroxid ist.

13. Elektrode nach einem der Ansprüche 1 bis 11, bei der das elektrochemisch aktive Material eine hydrierbare Legierung ist.

14. Elektrode nach einem der Ansprüche 1 bis 11, bei der das elektrochemisch aktive Material eine Verbindung auf Basis von Cadmium ist.

15. Akkumulator mit alkalischem Elektrolyt, umfassend eine Elektrode nach einem der vorhergehenden Ansprüche.

16. Verwendung einer Zusammensetzung, umfassend:
a) eine Verbindung des Typs Silan, und
b) mindestens 0,15 Gew.-% eines Polymers, umfassend mindestens ein Acrylmonomer
bei der Herstellung einer Elektrode eines Akkumulators, um die kalendarische oder zyklische Lebensdauer des Akkumulators bei einer Temperatur größer oder gleich 25°C zu verlängern.

17. Verwendung einer Zusammensetzung nach Anspruch 16, bei der das Silan und/oder das Polymer einem der Ansprüche 4, 5 oder 6 entsprechen.
